Europäisches Patentamt

European Patent Office

Office européen des brevets

(11) Veröffentlichungsnummer: **0 281 933 B1**

(12) **EUROPÄISCHE PATENTSCHRIFT**

(45) Veröffentlichungstag der Patentschrift: **23.09.92**

(21) Anmeldenummer: **88103233.8**

(22) Anmeldetag: **03.03.88**

(51) Int. Cl.⁵: **G01C 9/28**

(54) **Wasserwaage.**

(30) Priorität: **07.03.87 DE 3707425**

(43) Veröffentlichungstag der Anmeldung:
**14.09.88 Patentblatt 88/37**

(45) Bekanntmachung des Hinweises auf die
Patenterteilung:
**23.09.92 Patentblatt 92/39**

(84) Benannte Vertragsstaaten:
**AT BE CH DE ES FR GB GR IT LI LU NL SE**

(56) Entgegenhaltungen:
**CH-A- 463 803        DE-A- 3 432 911**
**DE-U- 8 334 916        FR-A- 1 296 492**
**FR-A- 2 048 230        US-A- 2 541 880**

(73) Patentinhaber: **BAYERISCHE MASS-INDUSTRIE**
**ARNO KELLER GMBH**
**Rosengasse 12**
**W-8562 Hersbruck(DE)**

(72) Erfinder: **Dengler, Herbert**
**Rosstaler Strasse 6**
**W-8501 Grosshabersdorf(DE)**

(74) Vertreter: **Matschkur, Peter Dipl.-Phys. et al**
**Czowalla - Matschkur Patentanwälte Dr. Kurt-**
**Schumacher-Strasse 23**
**W-8500 Nürnberg 11(DE)**

**Beschreibung**

Die Erfindung richtet sich auf eine Wasserwaage mit einem Metallhohlprofil mit kreisförmigem Fenster, in welches in bezüglich des Metallhohlprofils längsaxialer Richtung ein zylindrischer Libellenkörper für die Vertikallibelle formschlüssig einsetzbar und stoffschlüssig zu befestigen ist.

Ausgangspunkt hierfür ist die Wasserwaage nach CH-PS 463 803, bei welcher das Metallprofil im einen Fall einen zylindrischen Sitz, im anderen Fall einen konischen Sitz zur unmittelbaren Aufnahme des entsprechend zylindrisch oder konisch ausgebildeten Libellenkörpers aufweist. Vor dem Einbau der Libelle in ihren Sitz werden die Mantelfläche des Libellenkörpers und die Innenfläche des Sitzes mit einem Klebstoff eingestrichen. Weiterer Klebstoff wird in Nuten eingebracht, die zum Teil in dem Libellenkörper, zum Teil in dem Fenster des Metallhohlprofils angeordnet sind. Dieser soll nach dem Einsetzen und Justieren des Libellenkörpers abbinden und einen zuverlässigen Sitz gewährleisten. Ein zu frühes Abbinden des Klebstoffs würde dabei die Justierung beeinträchtigen. Härtet hingegen der Klebstoff zu langsam aus, besteht die Gefahr einer zwischenzeitlichen Dejustierung. Durch die unvermeidlichen Volumenänderungen beim Aushärten derartiger Klebstoffe ist eine weitere Gefahr gegeben, die zu einer mangelhaften Justierung Anlaß geben kann. Darüber hinaus bezieht die Anmelderin bei solchen Wasserwaagen ein Abreißen des Klebstoffs infolge Temperatur- und/oder Feuchtigkeitseinflüssen ausdrücklich ein, woraus zu folgern ist, dan der Genauigkeitsgrad derartiger Wasserwaagen nur beschränkt ist.

Von diesem Stand der Technik ausgehend wird bei einer anderen Wasserwaagenkonstruktion (Gm 83 34 916) ein hohes Maß an Meßgenauigkeit dadurch angestrebt, daß das Profil und der Libellenkörper aufeinander ausgerichtete Bohrungen, Nuten oder Stege aufweist, die eine Fixierung des Libellenkörpers in einer Weise bewirken sollen, daß ein Nachjustieren entbehrlich wird. Die Praxis hat allerdings ergeben, daß eine solche Lösung nicht realisierbar ist, da sie Fertigungstoleranzen der verwendeten Bauteile unberücksichtigt läßt. Die verschiedenen Möglichkeiten zum Einbauen von Horizontallibellen im Wasserwaagenhohlprofil (siehe beispielsweise die DE-A-3 432 911) unter einwandfreier Justierung des Libellenkörpers in einen in ein Fenster des Hohlprofils eingebrachten Sitz lassen sich allerdings nicht auf die Vertikallibellen ohne weiteres übertragen. Das Problem, auch für die Vertikallibellen einen besonders hohen Genauigkeitsgrad unter relativ geringem Aufwand zu erzielen, erweist sich deshalb als nach wie vor ungelöst.

Die Erfindung befaßt sich mit dieser Aufgabe und löst sie bei einer Wasserwaage der eingangs bezeichneten Gattung in der Weise, daß ein Libellenträger in der längsaxialen Richtung in das Hohlprofil eingesetzt und einen mit dessen Fenster fluchtenden zylindrischen Sitz zur Aufnahme eines die Libelle tragenden Libellenhalters aufweist und daß zwischen dem Libellenträger und dem Libellenhalter eine Verriegelungseinrichtung angeordnet ist, durch die der Libellenhalter bezüglich einer Achse (60) des zylindrischen Sitzes fest, aber bis zu seiner stoffschlüssigen Befestigung drehbar gelagert. ist. Die erfindungsgemäße Ausbildung einer solchen Wasserwaage geht von zwei grundlegenden Bauteilen aus, nämlich zunächst dem Libellenträger, der bei einem Metallhohlprofil in an sich bekannter Weise in dessen Längsrichtung eingeführt und dort in der gewünschten Lage fixiert wird. Die Fixierung kann durch formschlüssigen Eingriff des im allgemeinen aus einem Kunststoff-Spritzguß hergestellten Trägers in z.B. Innenrippen des Metallhohlprofils herbeigeführt werden. Zusätzlich können aber auch beim Hohlprofil und Libellenträger durchsetzende Niete, Stifte od. dgl. vorgesehen sein, die einen einwandfreien Sitz des Libellenträgers gegenüber dem Hohlprofil gewährleisten und - im Gegensatz zu Verklebungen od. dgl. -nicht der Gefahr einer Alterung ausgesetzt sind. An die fluchtende Anordnung des Sitzes dieses Libellenträgers gegenüber dem Hohlprofilfenster werden keine problematischen Anforderungen gestellt, so daß das weitere Bauteil, nämlich der die Libelle aufweisende Libellenhalter, ohne weiteres von außen her axial durch das Fenster des Hohlprofils in seinen Sitz in dem Libellenträger verbracht werden kann. Statt dort nun ohne weiteres verklebt zu werden, sieht die Erfindung zunächst einer Verriegelungseinvorrichtung zwischen Libellenträger und Libellenhalter vor, die zwar den Libellenhalter in axialer Richtung fixiert, aber seine zur Justierung erforderliche Drehbarkeit gewährleistet. Nach erfolgter Justierung kann dann der Libellenhalter stoffschlüssig fixiert werden, was besonders vorteilhaft durch Ultraschallverschweißung, aber auch in anderer Weise geschehen kann. Die hierzu notwendigen Elektroden können ohne weiteres in axialer Richtung in das Metallhohlprofil eingeführt werden. Eine derartige Fixierung wirkt innerhalb kürzester Zeit, in jedem Fall jedoch schneller als das Abbinden eines Klebers oder Gießharzes, und die Haltbarkeit einer solchen stoffschlüssigen Verbindung ist erheblich größer. Die Verbindung kann praktisch nur unter Zerstörung der Libellenanordnung aufgehoben werden.

Es liegt im Rahmen dieses allgemeinen Erfindungsgedankens, daß die Verriegelungseinrichtung mehrere in den Sitz hineinragende und in einer Radialebene angeordnete Nocken an dem einen Teil, nämlich dem Libellenträger oder dem Libellenhalter, und diesen Nocken entsprechende axiale Führungsnuten an dem anderen Teil aufweist, welche in eine die Nocken im Paßsitz aufnehmende Ringnut dieses anderen Teils münden. Es kann den Erfordernissen des Einzelfalls überlassen bleiben, welches der beiden Bauteile für die Nocken und welches für die Führungsnuten herangezogen wird. Diese Verriegelungseinrichtung fixiert den Libellenhalter zunächst in axialer Richtung innerhalb des Libellenträgers, und sie läßt darüber hinaus eine Drehbewegung des Libellenhalters gegenüber dem im Hohlprofil zuvor festgelegten Libellenträger zu, welche zum einwandfreien Justieren der Libelle erforderlich ist. Ist die Justierung durch Verdrehen des zylindrischen Libellenhalters um seine Achse abgeschlossen, erfolgt die stoffschlüssige Fixierung, z.B. durch Ultraschallverschweißung.

Es hat sich als besonders vorteilhaft erwiesen, die Anordnung so zu treffen, daß mindestens einer der Nocken eine größere oder geringere radiale Höhe als die anderen Nocken und die zugehörige Führungsnut eine entsprechende größere oder geringere radiale Tiefe aufweist. Daraus folgt zwangsläufig, daß der Libellenhalter nur in einer bestimmten Drehstellung axial in seinen Sitz in den Libellenträger eingeführt werden kann. Auf diese Weise läßt sich eine nachfolgende Drehbewegung beim Justiervorgang bereits vorbereiten, was die Montage wesentlich erleichtert.

Eine weitere Ausgestaltung erfährt die Erfindung dadurch, daß der Libellenhalter einen durch ein Fenster zu seinem Umfang hin offenen Paßsitz zum radialen Einschieben eines die Libelle tragenden Libellenkörpers aufweist, dessen in dem Fenster liegende Fläche mit dem Boden der Ringnut der Verriegelungseinrichtung eine Kreisfläche bildet und daß diese Fläche beim Verdrehen des Libellenhalters von wenigstens einem der Nocken in radialer Richtung in seinem Paßsitz beaufschlagt wird. Bei dieser Ausführungsform ist mithin ein weiteres Bauteil, nämlich ein die Libelle aufnehmender Libellenkörper vorgesehen, der in einen entsprechenden Paßsitz innerhalb des Libellenhalters radial einschiebbar ist. Dies vereinfacht die Fertigung wesentlich und stellt insofern keinen zusätzlichen Unsicherheitsfaktor dar, als nämlich der Libellenkörper bei der der Verriegelung dienenden Drehbewegung des Libellenhalters mit einem der Nocken in Eingriff gelangt und in Richtung seiner Einschiebbewegung in dem Paßsitz beaufschlagt wird. Dadurch läßt sich ein zuverlässiger und räumlich vorbestimmter Sitz des Libellenkörpers innerhalb des Libellenhalters einwandfrei herbeiführen, ohne daß es hierzu besonderer Montageschritte bedürfte.

Es liegt im Rahmen der Erfindung, daß die Stirnwände des Libellenhalters mit der Außenfläche des Hohlprofils fluchten. Dadurch werden die beim Einbringen des Fensters in das Metallhohlprofil im allgemeinen unvermeidlich auftretenden Abgratkanten soweit abgedeckt, daß diese nicht mehr störend in Erscheinung treten. Andererseits wird eine zusätzliche Nachbearbeitung der Ränder des Fensters des Metallprofils entbehrlich. Die Erfindung sieht weiter vor, daß dem Libellenhalter ein die Führungsnuten verschließender Abdeckring zugeordnet ist. Dieser Abdeckring kann bei einer Ausführungsform über die Außenfläche des Metallprofils hinausragen. Es ist aber auch möglich, die axiale Länge des Libellenhalters derart verkürzt auszubilden, daß der Abdeckring nach seinem Einsetzen mit der Außenfläche des Metallprofils fluchtet. Vorteilhafterweise ist der Abdeckring mit wenigstens zwei axial gerichteten Zungen versehen, die in entsprechende Nuten des Libellenhalters eingreifen.

Weitere Merkmale, Einzelheiten und Vorteile der Erfindung ergeben sich aus der folgenden Beschreibung einer bevorzugten Ausführungsform der Erfindung sowie anhand der Zeichnung. Hierbei zeigen:

Fig. 1 die abgebrochene Darstellung einer Wasserwaage mit Vertikallibelle;

Fig. 2 eine auseinandergezogene Darstellung der erfindungsgemäßen Vorrichtung in ihrer Gesamtheit;

Fig. 3 eine Ausführungsform des Libellenträgers in axialer Ansicht;

Fig. 4 eine entsprechende Ansicht des Libellenhalters und

Fig. 5 diesen in Seitenansicht;

Fig. 6 die Anordnung nach Fig. 2 in zusammengebauter Stellung und

Fig. 7 im Schnitt nach Linie VII - VII in Fig. 6 sowie

Fig. 8 ein weiteres Detail in perspektivischer Dar-Stellung.

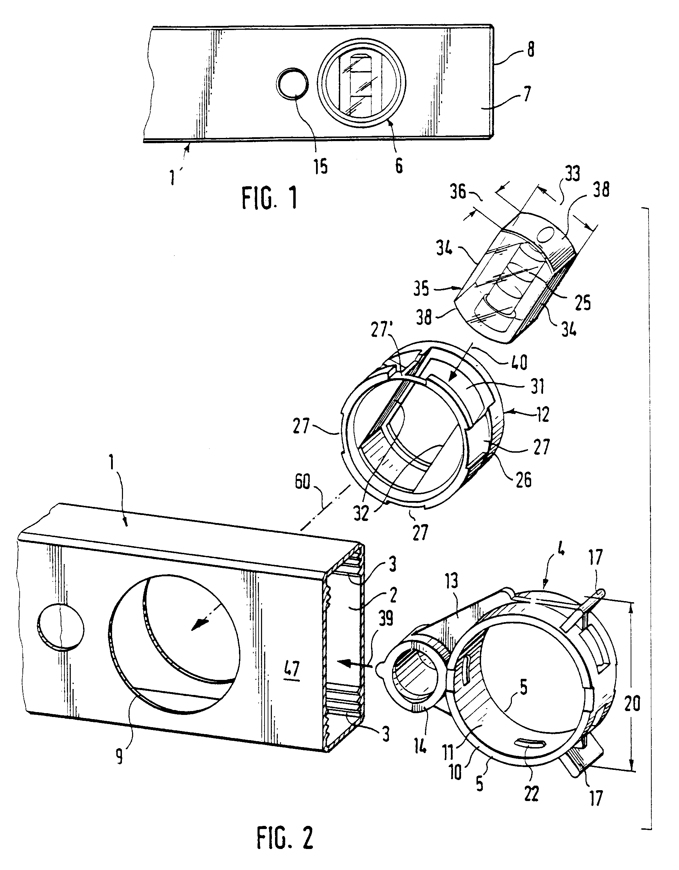

Die Wasserwaage besteht aus einem Metallhohlprofil 1, im allgemeinen aus Leichtmetall. Dieses weist einen rechteckigen Querschnitt 2 auf und an der Innenseite angeordnete längsverlaufende Rippen 3, die sich beim Einführen des Libellenträgers 4 in dessen axiale Stirnwände 5 einschneiden und dadurch eine formschlüssige Verbindung ergeben. Die Vertikallibelle 6 befindet sich im Bereich des Endes 7 des Hohlprofils 1, dessen Ende durch eine nicht im einzelnen wiedergegebene Abdeckung 8 verschlossen ist. Das Metallprofil 1 weist ein durchgehendes Fenster 9 auf, welches der Aufnahme der Vertikallibelle 6 dient, wie dies in Fig. 1 dargestellt ist.

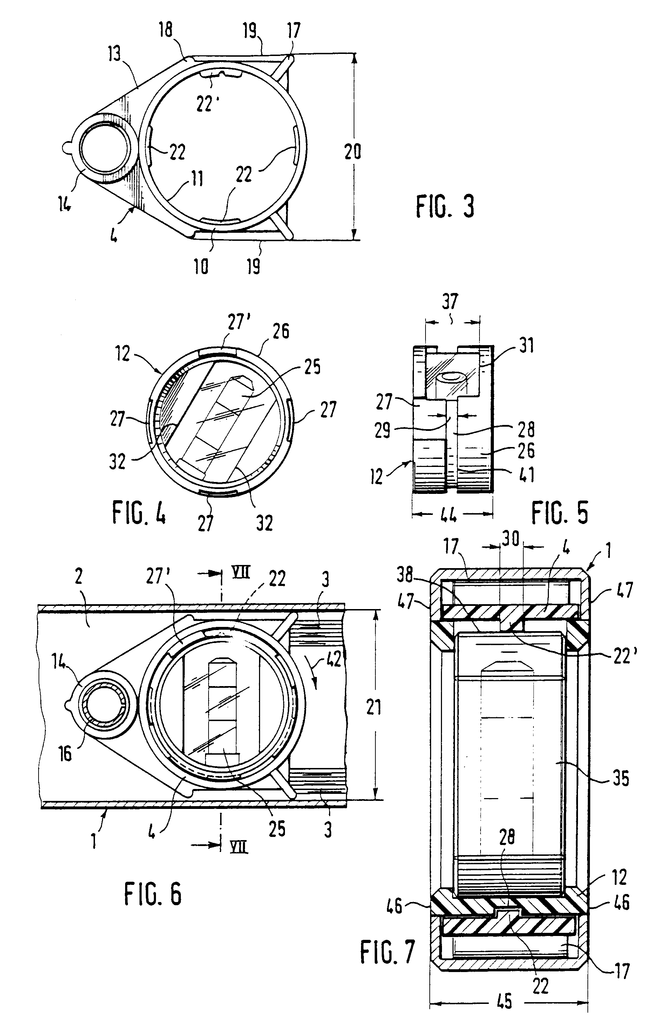

Die Anordnung besteht zunächst aus einem Libellenträger 4 etwa in Form eines zylindrischen Körpers 10, der einen zylindrischen Sitz 11 zur Aufnahme des Libellenhalters 12 besitzt. Der ringförmige Körper 10 weist einen seitlichen Ansatz 13 mit einer angeformten Öse 14 auf, die im Einbauzustand (s. insbes. Fig. 6) mit einer Bohrung 15 in dem Metallprofil 1 fluchtet und zur Aufnahme eines Hohlniets 16 od. dgl. zur Fixierung des Libellenträgers 4 innerhalb des Hohlprofils 1 dient. An zwei einander gegenüberliegenden Seiten weist der ringförmige Körper 10 des Libellenträgers 4 nokkenförmige Ansätze 17 u. 18 auf, deren gedachte Verbindungslinien 19 parallel zueinander verlaufen. Der Abstand 20 dieser Verbindungslinien 19 entspricht etwa der lichten Querschnittshöhe 21 des Profils 1 In den lichten Innenraum des Sitzes 11 dieses Libellenträgers 4 ragen vier etwa im Winkel von 90° in einer gemeinsamen Radialebene angeordnete Nocken 22, von denen allerdings der eine Nocken 22′ eine geringfügig größere radiale Höhe aufweist als die anderen Nocken 22.

Die Libelle 25 befindet sich in dem Libellenhalter 12, dessen Außenfläche 26 einen Zylinder darstellt, der der Zylinderform des Sitzes 11 des Libellenträgers 4 entspricht. An dem Zylindermantel 26 sind etwa im Winkelabstand von 90° achsparallel angeordnete Nuten 27 vorgesehen, deren Anzahl und Anordnung derjenigen der Nocken 22 des Libellenträgers 4 entspricht. Wie in jenem Fall der Nocken 22′ eine größere Höhe aufweist, ist bei dem Libellenhalter 12 die Führungsnut 27′ geringfügig tiefer in den Zylindermantel 26 eingeschnitten. Wird der Libellenhalter 12 in axialer Richtung 60 in den Paßsitz 11 des Libellenträgers 4 eingesetzt, vgl. insbes. Fig. 2, so ist dies nur möglich, wenn der Nocken 22′ des Libellenträgers 4 und die Führungsnut 27′ des Libellenhalters 12 miteinander koinzidieren. Die Nuten 27 münden in eine Ringnut 28 in der Mantelfläche 26 ein, deren lichte Weite 29 der axialen Breite 30 der Nocken 22 entspricht. Der Libellenhalter 12 weist außerdem ein zum Zylindermantel 26 hin offenes Fenster 31 auf, welches einen rechteckigen Querschnitt besitzt. An dieses schließen sich innerhalb des Libellenhalters 12 zwei parallele Führungsflächen 32 an, deren Abstand und Flächengröße im Abstand 33 der parallelen Flächen 34 eines aus glasklarem Werkstoff bestehenden Libellenkörpers 35 entspricht, der die eigentliche Libelle 25 trägt. Die Breite 36 dieser Fläche 34 entspricht der Breite 37 des Fensters 31 des Libellenhalters 12. Auf diese Weise findet der Libellenkörper 35 innerhalb der von dem Fenster 31 und den beiden Flächen 32 gebildeten Ausnehmung des Libellenhalters 12 einen einwandfreien Paßsitz. Die gegenüberliegenden kopfseitigen Flächen 38 des Libellenkörpers 35 fluchten mit dem Boden der Ringnut 28 des Libellenhalters 12.

Beim Zusammenbau der Vorrichtung wird zunächst der Libellenträger 4 in der aus Fig. 2 ersichtlichen Position in Pfeilrichtung 39 in den lichten Querschnitt 2 des Hohlprofils 1 eingeführt, bis der Sitz 11 des zylindrischen Körpers dieses Libellenträgers 4 mit der Fensteröffnung 9 fluchtet.

Hierbei schneiden die Profilierungsrippen 3 des Hohlprofils 1 in die Wandung des Trägers 4 ein. Zusätzlich wird der Libellenträger 4 durch einendie Öffnung 15 und die Öse 14 geführten Niet 16 in seiner Stellung fixiert. Der Libellenkörper 35 wird seinerseits zunächst in das Fenster 31 des Libellenhalters 12 in Pfeilrichtung 40 in seinen Sitz zwischen den Flächen 32 eingeführt. Daraufhin wird dann der komplettierte Libellenhalter 12 in den zylindrischen Paßsitz 11 des Libellenträgers eingebracht. Hierbei greifen die nach innen gerichteten Nocken 22 des Paßsitzes 11 in die ihnen zugeordneten Führungsnuten 27 in der Mantelfläche 26 des Libellenhalters 12 ein. Die axiale Einführbewegung 60 geht bis zum Anschlag der seitlichen Nockenflächen an der entsprechenden Seitenwand 41 der Ringnut 28 des Libellenhalters 12. In dieser Stellung läßt sich der Libellenhalter 12 innerhalb seines Sitzes ii in Pfeilrichtung 42 (s. Fig. 6) um seine Achse verdrehen, um damit die Justierung der Libelle 25 gegenüber dem Hohl profil 1 der Wasserwaage zu bewirken. Hierbei läuft einer der Nocken 22, bei einer bevorzugten Ausführungsform der höhere Nocken 22′, auf die Fläche 38 des Libellenkörpers 35 auf und beaufschlagt diesen in seiner Einschubrichtung 40 in dem Sitz zwischen den Flächen 32 des Libellenhalters 12, so daß der Libellenkörper 35 seine vorbestimmte Lage erhält, die für die Justierung der Libelle 25 vorausgesetzt wird. Nach erfolgter Justierung der Libelle 25 wird ein Elektrodenpaar in das Ende 7 des Metallhohlprofils 1 eingeführt, um die Ultraschallverschweißung des Libellenhalters 12 mit dem bereits in dem Profil 1 fixierten Liebellenkörper 4 zu bewirken.

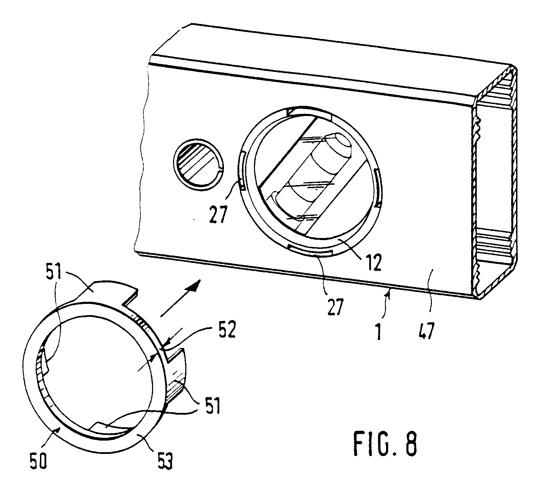

Die axiale Länge 44 des Libellenhalters 12 entspricht den Außenabmessungen 45 der Schmalseite des Hohlprofils 1, so daß die Außenkanten 46 des Libellenhalters 12 mit der Außenfläche 47 des Profils 1 fluchten. Die in der Einbaustellung des Libellenhalters 12 in dem Sitz 11 des Libellenträgers 4 seitlich offen Nuten 27 dieses Libellenhalters 12 werden, wie Fig. 8 erkennen läßt, mittels eines Abdeckrings 50 verschlossen, der hierzu entsprechende Zungen 51 aufweist, die in die Führungsnuten 27 des Libellenhalters 12 eingreifen. Bei der Ausführungsform nach Fig. 7 würde in diesem Fall der Abdeckring 50 um seine Wandstärke 52 die entsprechende Außenfläche 47 des Profils 1 überragen. Es ist jedoch auch denkbar (was jedoch, da an sich verständlich, im einzelnen nicht zeichnerisch dargestellt ist), die axiale Länge 44 des Libellenhalters 12 an der Seite der Nuten 27 soweit zu verkürzen, daß die Stirnfläche 53 im Einbauzustand mit der Fläche 47 des Profils 1 fluchtet.

**Patentansprüche**

1. Wasserwaage mit einem Metallhohlprofil (1) mit kreisförmigem Fenster (9), in welches in bezüglich des Metallhohlprofils (1) längsaxialer Richtung (39) ein zylindrischer Libellenkörper (35) für die Vertikallibelle (6) formschlüssig einsetzbar und stoffschlüssig zu befestigen ist, dadurch gekennzeichnet, daß ein Libellenträger (4) in der längsaxialen Richtung (39) in das Hohlprofil (1) eingesetzt ist und einen mit dessen Fenster (9) fluchtenden zylindrischen Sitz (39) zur Aufnahme eines die Libelle (25) tragenden Libellenhalters (12) aufweist und daß zwischen dem Libellenträger (4) und dem Libellenhalter (12) eine Verriegelungseinrichtung (22, 27) angeordnet ist, durch die der Libellenhalter (12) bezüglich einer Achse (60) des zylindrischen Sitzes (11) fest, aber bis zu seiner stoffschlüssigen Befestigung drehbar gelagert ist.

2. Wasserwaage nach Anspruch 1, dadurch gekennzeichnet, daß die Verriegelungseinrichtung mehrere in einer Radialebene angeordnete, in den Sitz (11) hineinragende Nocken (22) an dem einen Teil (Libellenträger (4) oder Libellenhalter (12) ) und diesen Nocken (22) entsprechende axiale Führungsnuten (27) an dem anderen Teil aufweist, welche in eine die Nocken (22) im Paßsitz aufnehmende Ringnut (28) münden.

3. Wasserwaage nach Anspruch 1 und 2, dadurch gekennzeichnet, daß mindestens einer der Nocken (22) eine größere oder geringere radiale Höhe als die anderen Nocken (22) und die zugehörige Führungsnut (27) eine entsprechende größere oder geringere radiale Tiefe aufweist.

4. Wasserwaage nach einem der Ansprüche 1 bis 3, dadurch gekennzeichnet, daß der Libellenhalter (12) einen durch ein Fenster (31) zu seinem Umfang (26) hin offenen Paßsitz zum radialen Einschieben eines die Libelle tragenden Libellenkörpers (35) aufweist, dessen in dem Fenster (31) liegende Fläche (38) mit dem Boden der Ringnut (28) eine Kreisfläche bildet und daß diese Fläche (38) beim Verdrehen des Libellenhalters (12) von wenigstens einem der Nocken (22) in Einschubrichtung in seinen Paßsitz hinein beaufschlagt wird.

5. Wasserwaage nach einem der Ansprüche 1 bis 4, dadurch gekennzeichnet, daß die Stirnwände (46) des Libellenhalters (12) mit der Außenfläche (47) des Hohlprofils (1) fluchten.

6. Wasserwaage nach einem der Ansprüche 1 bis 5, dadurch gekennzeichnet, daß dem Libellenhalter (12) ein die Führungsnuten (27) verschließender Abdeckring (50) zugeordnet ist.

7. Wasserwaage nach Anspruch 6, dadurch gekennzeichnet, daß der Abdeckring (50) wenigstens zwei in entsprechende Nuten (27) des Libellenhalters (12) eingreifende Zungen (51) aufweist.

8. Wasserwaage nach Anspruch 6, dadurch gekennzeichnet, daß die Außenfläche (53) des Abdeckrings (50) mit der Außenfläche (47) des Hohlprofils (1) fluchtet.

9. Wasserwaage nach einem der Ansprüche 1 - 8, dadurch gekennzeichnet, daß durch in der längsaxialen Richtung des Metallhohlprofils (1) eingeführte Elektroden der Libellenhalter (12) mit dem Libellenträger (4) durch Ultraschallverschweißung verbunden ist.

**Claims**

1. Bubble level with a metal hollow profile (1) with a circular window (9), into which a cylindrical bubble level body (35) for the vertical bubble level (6) is insertable with positive locking in the direction of the longitudinal axis of the metal hollow profile (1) and is to be fixed by material locking, characterised in that a bubble level carrier (4) is inserted into the hollow profile (1) in the direction of the longitudinal axis (39) and has a cylindrical seat (11) flush with its window (9) for receiving a bubble level support (12) holding the bubble level (25), and in that between the bubble level carrier (4) and the bubble level support (12) a locking device (22, 27) is provided, by which the bubble level support (12) is mounted permanently relative to an axis (60) of the cylindrical seat (11), but rotatably as far as its material-locking fixing.

2. Bubble level according to claim 1, characterised in that the locking device has on one part (bubble level carrier (4) or bubble level support (12)) a plurality of cams (22) disposed in a radial plane and projecting into the seat (11), and on the other part axial guide grooves (27) corresponding to these cams (22) and opening into an annular groove (28) receiving these cams (22) in a snug fit.

3. Bubble level according to claim 1 and 2, characterised in that at least one of the cams (22) has a larger or smaller radial height than the other cams (22) and the associated guide groove (27) has a corresponding larger or smaller radial hollow.

4. Bubble level according to one of claims 1 to 3, characterised in that the bubble level support (12) has a snug fit open to its circumference (26) by a window (31) for the radial insertion of a bubble level body (35) carrying the bubble level, whose face (38) lying in the window (31) forms a circular face with the base of the annular groove (28), and in that this face (38) is moved into its snug fit upon rotation of the bubble level support (12) by at least one of the cams (22) in the insertion direction.

5. Bubble level according to one of claims 1 to 4, characterised in that the end walls (46) of the bubble level support (12) are flush with the outer face (47) of the hollow profile (1).

6. Bubble level according to one of claims 1 to 5, characterised in that a cover ring (50) sealing the guide grooves (27) is associated with the bubble level support (12).

7. Bubble level according to claim 6, characterised in that the cover ring (50) has at least two tongues (51) engaging in corresponding grooves (27) of the bubble level support (12).

8. Bubble level according to claim 6, characterised in that the outer face (53) of the cover ring (50) is flush with the outer face (47) of the hollow profile (1).

9. Bubble level according to one of claims 1 to 8, characterised in that the bubble level support (12) is connected by ultrasound welding to the bubble level carrier (4) by electrodes inserted in the direction of the longitudinal axis of the metal hollow profile (1).

**Revendications**

1. Niveau à bulle d'air comprenant un profilé métallique creux (1) à fenêtre circulaire (9) dans lequel un corps cylindrique (35) de niveau à bulle d'air destiné au niveau vertical (6) à huile d'air peut être introduit en engagement positif selon la direction (39) de l'axe longitudinal du profilé métallique creux (1) et doit être fixé en engagement matériel, caractérisé en ce qu'un support (4) de niveau à bulle d'air est introduit dans le profilé creux (1) dans la direction (39) de l'axe longitudinal et comporte un siège cylindrique (11) aligné avec sa fenêtre (9) pour recevoir un porte-niveau (12) supportant le niveau à bulle d'air (25), et en ce qu'un dispositif de verrouillage (22, 27) par lequel la porte-niveau (12) est logé de façon fixe par rapport à un axe (60) du siège cylindrique (11), mais à rotation jusqu'à sa fixation en engagement matériel, entre le support (4) de niveau et le porte-niveau (12).

2. Niveau à bulle d'air selon la revendication 1, caractérisé en ce que le dispositif de verrouillage comporte, sur l'un des éléments (support (4) de niveau ou porte-niveau (12)), plusieurs ergots (22) disposés dans un plan radial, faisant saillie dans le siège (11) et, sur l'autre élément, des encoches axiales de guidage (27) qui correspondant à ces ergots (22) et débouchent dans une encoche annulaire (28) recevant mes ergots (22) à ajustement fin.

3. Niveau à bulle d'air selon la revendication 1 ou 2, caractérisé en ce que la hauteur radiale d'au moins l'un des ergots (22) est plus grande ou plus petite que celle des autres ergots (22) et en ce que l'encoche de guidage associée (27) est d'une profondeur radiale correspondante plus grande ou plus petite.

4. Niveau à huile d'air selon l'une des revendications 1 à 3, caractérisé an ce que le porte-niveau (12) présente un ajustement fin ouvert par une fenêtre (31) vers sa périphérie (26) en vue d'une introduction radiale d'une corps de niveau (35), supportant le niveau, dont la surface (38) située dans la fenêtre (31) constitue avec le fond de l'encoche annulaire (28) une surface circulaire et en ce qu'au moins l'une des ergots (22) vient s'appliquer, selon la direction d'introduction, sur cette surface (38) dans son ajustement fin lors de la rotation du porte-niveau (12).

5. Niveau à bulle d'aire selon l'une des revendications 1 à 4, caractérisé en ce que les parois frontales (46) du porte-niveau (12) sont alignées avec la surface extérieure (47) du profilé creux (1).

6. Niveau à bulle d'air selon l'une des revendications 1 à 5, caractérisé en ce qu'une bague de recouvrement (50) fermant les encoches de guidage (27) est associée au porte-niveau (12).

7. Niveau à bulle d'air selon la revendication 6, caractérisé en ce que la bague de recouvrement (50) comporte au moins deux languettes (51) pénétrant dans des encoches correspondantes (27) du porte-niveau (12).

8. Niveau à bulle d'air selon la revendication 6, caractérisé en ce que la surface extérieure (53) de la bague de recouvrement (50) est alignée avec la surface extérieure (47) du profilé creux (1).

9. Niveau à bulle d'air selon l'une des revendications 1 à 8, caractérisé en ce que le porte-niveau (12) est relié au support (4) de niveau par soudage par ultrasons effectué à l'aide d'électrodes introduites dans la direction de l'axe longitudinal du profilé métallique creux (1).

FIG. 1

FIG. 2

FIG. 3

FIG. 4

FIG. 5

FIG. 6

FIG. 7

FIG. 8